# EUROPÄISCHE PATENTANMELDUNG

(11) **EP 1 035 394 A1**
(43) Veröffentlichungstag der Anmeldung: **13.09.2000**
(21) Anmeldenummer: 99250351.6
(22) Anmeldetag: 05.10.1999
(51) Int. Cl.: F27D 17/00, B01D 45/16, B01D 45/14, B01D 50/00

(54) **Verfahren und Vorrichtung zum Führen von heissen, mit Partikeln beladenen Gasen**

(30) Priorität: 12.02.1999 DE 19907473
(71) Anmelder: SMS Demag AG, 40237 Düsseldorf (DE)
(72) Erfinder: Servaty, Hans-Dieter, Dipl.-Ing., 47809 Krefeld (DE); Dörken, Hans-Peter, Dipl.-Ing., 47802 Krefeld (DE)
(74) Vertreter: Meissner, Peter E., Dipl.-Ing.

(57) **Zusammenfassung**

Die Erfindung betrifft ein Verfahren zum Führen von heißen, mit Partikeln beladenen Gasen, die bei einem metallurgischen Prozeß, insbesondere in einem metallurgischen Gefäß wie einem Elektrolichtbogenofen, über eine Gasleitung einer Gasreinigung zugeführt werden, wobei der Gasstrom in einem Abschnitt der Gasleitung in Rotation versetzt wird.

Die Erfindung ist gekennzeichnet durch folgende Schritte:
a) der Randbereich des rotierenden Gasstromes wird abgeleitet und
b) einer unabhängig vom Gashauptstrom durchführbaren Behandlung unterzogen.

Die Erfindung betrifft außerdem eine Einrichtung zum Führen von heißen, mit Partikeln beladenen Gasen mit einer metallurgischen Anlage, insbesondere einem metallurgischen Gefäß wie ein Elektrolichtbogenofen, und einer Gasleitung, welche die metallurgische Anlage mit einem einen Tuchfilter aufweisenden Gasreinigungsanlage verbindet, wobei die Gasleitung einen rohrförmig ausgestalteten Bereich besitzt, welcher ein konzentrisch angeordnetes Verwirbelungsteil aufweist, mit dem ein durch die Gasleitung führbarer Gasstrom in Rotation versetzbar ist.

## Beschreibung

Die Erfindung betrifft ein Verfahren zum Führen von heißen, mit Partikeln beladenen Gasen, die bei einem metallurgischen Prozeß, insbesondere in einem metallurgischen Gefäß wie einem Elektrolichtbogenofen über eine Gasleitung einer Gasreinigung zugeführt werden, wobei der Gasstrom in einem Abschnitt der Gasleitung in Rotation versetzt wird, sowie eine entsprechende Einrichtung dazu.

Mit Partikeln beladene Gase, sogenannte Rauchgase, werden in der Hüttenindustrie in Reinigungsanlagen und zwar in Elektro- oder Nassfilter gereinigt. Diese Gase sind heiß und intensiv mit Staub beladen, einige dieser Staubpartikel können solche hohen Temperaturen aufweisen, daß sie als sogenannte Funken noch glühen.

Soweit die einzelnen Partikel elektrisch leitende Teilchen sind, können diese unmittelbar aus dem Gasstrom in einem Nassfilter abgeschieden werden. Beim Einsatz von Tuchfiltern besteht aber die Gefahr, daß durch diese mitgerissenen Funken Brände entstehen, durch die solche Trocken-Filteranlagen zerstört werden können.

Ein weiteres Problem beim Einsatz von Tuchfiltern zum Reinigen von heißen Rauch- oder Staubgasen ist der Einsatz einer richtigen Fraktion des Staubes, um ein Verkleben der einzelnen Filtertaschen zu vermeiden.

Aus DE-PS 21 113 062 ist ein Taschenfilter bekannt, bei dem eine Teilmenge des im Filter abgeschiedenen Staubgutes nach der Abreinigung der Filtertaschenflächen aus dem Staubsammelraum dem in das Filtergehäuse einströmenden Staubgas wieder zugeführt wird.

Aus diesem Dokument sind keine Maßnahmen gegen das Eindringen von noch glühenden Staubteilchen dargelegt.

Aus DE 25 54 096 C3 ist eine Anlage zum Filtern von heißen Rauch- oder Staubgasen, insbesondere aus Schmelzöfen bekannt, bei dem eine heiße Teilgasmenge über einen Sättigungskühler geführt wird. Die gesättigte und gekühlte Teilgasmenge wird eine Gasmenge, die unter Umgehung des Sättigungskühlers über eine Bypass-Leitung der Abgasleitung des Sättigungskühlers geleitet wrid, kurz vor dem Taschen- oder Schlauchfilter zugeführt.

Bei dem Gegenstand dieses Patentes ist es immer noch möglich, daß einzelne Funken über die Bypass-Leitung direkt in den brandempfindlichen Filter gelangen.

Weiterhin ist aus DE-OS 26 13 813 ein Gerät zum Reinigen von Abgasen bekannt, bei dem in einem zylindrischen Bauteil ein Wirbel erzeugendes Glied vorgesehen ist, welches eine Vielzahl von Wirbelschaufeln zur Verwirbelung des Abgases aufweist, so daß die Verweildauer des Abgases im Zylinder verlängert ist und unverbrannte Feststoffteilchen, Funkenteilchen und Flammen des Abgases zentrifugal abgetrennt und gelöscht werden, und als relativ sauberes Gas entlassen wird.

Das aus dieser Schrift bekannte Reinigungsgerät dient insbesondere zur Entfernung von unverbrannten Feststoffteilchen, Funkenteilchen und Flammproduktteilchen des Abgases eines Verbrennungsmotors. Für Gasmengen, wie sie bei metallurgischen Prozessen zu finden sind, ist das aus dieser Schrift bekannte Gerät nicht geeignet.

Es ist Ziel der vorliegenden Erfindung, ein Verfahren und eine entsprechende Einrichtung zu schaffen, bei der kostengünstig und instandhaltungsgerecht heiße, mit Partikeln beladene Gase, die bei metallurgischen Prozessen freigesetzt werden, in gewollter Fraktion funkenfrei einem Tuchfilter zugeführt werden.

Die Erfindung erreicht dieses Ziel durch die kennzeichnenden Merkmale des Verfahrensanspruchs 1 und des Vorrichtungsanspruchs 7. Erfindungsgemäß werden die bei einem metallurgischen Prozeß entstehenden heißen, mit Partikeln beladenen Gase die sogenannten Rauchgase in einen Teil der Gasleitung vor der Filteranlage in Rotation versetzt. Vorzugsweise ist dabei dieser Teil der Gasleitung vertikal angeordnet, wobei im oberen Teil dieses vertikalen Leitungsstücks ein Leitrad mit feststehenden oder verstellbaren Leitschaufeln das Gas verwirbelt.

Die äußeren Schichten des rotierenden Gasvolumens werden vorgebbar abgezweigt und einer Sonderbehandlung unterzogen. Diese Behandlung besteht darin, daß die Gasteilmenge abgebremst, gelöscht und/oder gekühlt wird.

Da bei der Rotation gerade die größeren Partikel im äußersten Randbereich des Gasstromes sich befinden, können gezielt entsprechend der Körnungsbandbreite aus der Gashauptströmung die Partikel herausgeleitet werden, die den größten Energieinhalt aufweisen, also als Funken auftreten. Durch die Möglichkeit, gerade diesen Gasteilstrom der o.g. Sonderbehandlung zu unterziehen wird sichergestellt, daß nach der Behandlung keine Funken zu der Filteranlage, welche üblicher Weise einen Tuchfilter aufweist, gelangen kann.

Soweit der funkenfreie Gasteilstrom den Gashauptstrom wieder zugeführt wird, wird sichergestellt, daß eine breitgefächerte Staubkonzentration dem Filter zugeführt wird, so daß nicht nur eine optimale Reinigung des Gases möglich ist, sondern auch die Filtertücher sich gegebenenfalls durch ein zu hohen Feinanteil zusetzen.

Das Ableiten des Gasteilvolumens aus dem Gashauptstrom wird durch Klappen ermöglicht, die in Form von verstellbaren Ableitblechen das Gas einer Gasführung zuführt. Diese Gasführung ist in einer vorteilhaften Ausgestaltung als Rinne ausgebildet, deren offener Teil schlitzförmig ausgestaltet ist. Um den Gasteilstrom nach seiner Abzweigung aus dem Gashauptstrom so weit wie möglich abzubremsen, ist die Rinne rechteckig mit geraden Wänden versehen. Um die Geschwindigkeit des Gasteilstromes weitestmöglich zu mindern, ist vorgesehen, Hindernisse in der Gasführung anzuordnen. In einer vorteilhaften Ausgestaltung sind diese Hindernisse schwenkbare Klappen, so daß der Abbremseffekt steuerbar eingestellt werden kann.

Weiterhin wird vorgeschlagen, über diese Klappen, an der dem Gasstrom zugeneigten Prallfäche eine Perforation vorzusehen, welche mit einer Gasförderstation in Verbindung gebracht werden kann. Zur schnellen Löschung der Staubpartikel können gasförmige Medien, insbesondere Inertgase wie Stickstoff verwendet werden.

In einer weiteren Ausgestaltung ist die Gasführung nur zu einem Teil als Rinne ausgebildet, die an der Außenwand der Gasleitung befestigt ist und über die schlitzförmige Öffnung mit dem Innenraum der Gasleitung in Verbindung steht, und zum übrigen Teil als Rohr ausgebildet ist. Die Mündung dieses Rohres ist als Saugdüse ausgestaltet, welche in den Innenraum der Gasleitung ragt.

Weiterhin wird vorgeschlagen, im Bereich der Mündung dieses Rohres einen Ablass oder eine gasdichte Austragseinheit vorzusehen, über den gezielt funkenfreier Staub abgezogen werden kann.

Unabhängig davon, ob die Gasführung als Rinne oder als Rohr ausgestaltet ist, wird in einer vorteilhaften Weiterbildung der Erfindung vorgeschlagen, zur Erhöhung der effektiven Strömungslänge diese Gasführung zick-zack-förmig auszugestalten.

In Abhängigkeit der Ausgestaltung und der verwendeten Strömungshindernisse in der Gasführung wie auch der Gesamtgasmenge und dessen Strömungsgeschwindigkeit werden die Klappen verschwenkt. Als Stellgröße dienen die Parameter Gasgeschwindigkeit, Staubkonzentration und Partikelgröße einer bestimmten Staubfraktion.

Ein Beispiel der Erfindung ist in der beigefügten Zeichnung dargelegt. Dabei zeigen die
- Figur 1: Einen Schnitt durch die Einrichtung zum Führen und Ableiten des Rauchgases,
- Figur 2: Einen Schnitt AA,
- Figur 3: Gasführung mit Strömungshindernissen,
- Figur 4: Die Ausgestaltung der Gasführung als Rinne und Rohr.

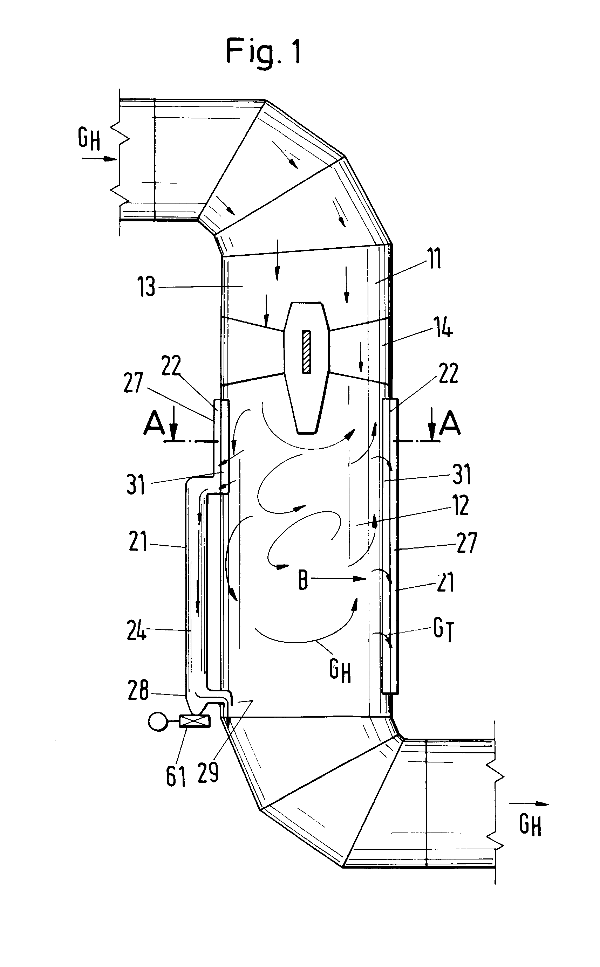

Die Figur 1 zeigt eine Gasleitung 11, welche in einem Teilbereich 12 vertikal geführt ist. Im Innenraum 13 der Gasleitung 11 ist der Verwirbelungsteil 14 konzentrisch angeordnet, durch welches der Gashauptstrom in Rotation versetzbar ist.

Am Rand der Gasleitung 11 ist eine Gasführung 21 vorgesehen, welche über eine Öffnung 22 mit dem Innenraum 13 der Gasleitung 11 strömungsmäßig verbunden ist. Im rechten Teil der Figur 1 ist die Gasführung 21 als Rinne 27 ausgestaltet, welche über seine gesamte vertikale Länge über einen Schlitz 23 mit dem Innenraum 13 der Gasleitung 11 in Verbindung steht.

Im linken Teil der Figur 1 ist ein Teil der Gasführung 21 als Rinne 27 ausgestaltet, welcher in Strömungsrichtung mit einem Rohr 24 verbunden ist. Das Rohr 24 weist an seiner Mündung 28 eine Saugdüse 29 auf, die in den Innenraum 13 der Gasleitung 21 ragt.

Im Mündungsbereich 28 des Rohres 24 ist ein Ablass 61 vorgesehen.

Die eingezeichneten Pfeile stellen die Strömung dar und zwar die Gashauptströmung G_{H}, die durch das Verwirbelungsteil 14 in Rotation versetzt und von der ein Gasteilstrom G_{T} abgezweigt und in der Rinne 27 oder in dem Rohr 24 einer Sonderbehandlung zugeführt wird.

In der Figur 1 wird der Gasteilstrom nicht ausgeschleust, sondern komplett wieder in den Gashauptstrom zurückgeführt.

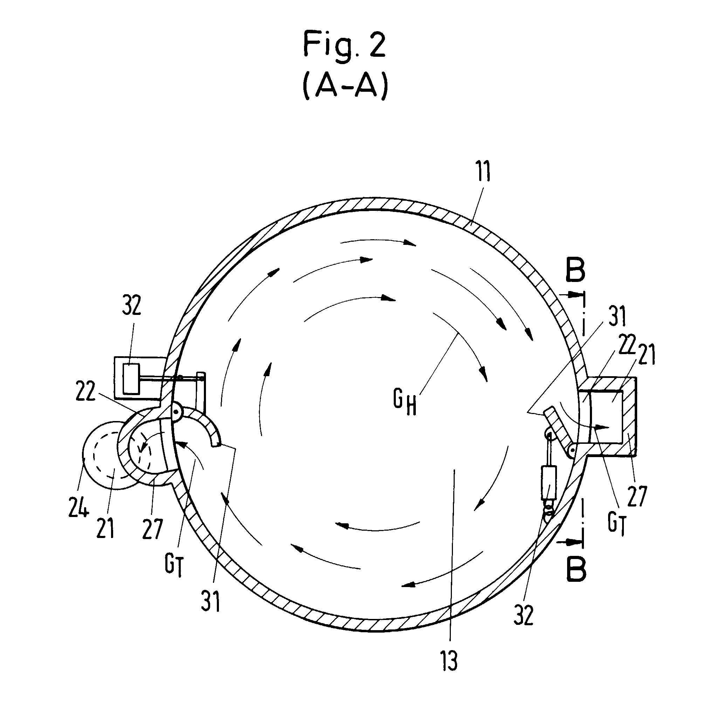

Die Figur 2 zeigt den Schnitt AA durch die Gasleitung 11.

Im rechten Teil der Figur ist die Gasführung 21 als Rinne 27 ausgestaltet, die über die Öffnung 22 mit dem Innenraum 13 der Gasleitung 11 strömungsmäßig in Verbindung steht.

Die Öffnung 22 ist teilweise durch eine Klappe 31 abgedeckt, die in Form eines Ableitbleches einen Teilstrom aus dem in Rotation versetzten Gashauptstrom G_{H} abzweigt.

Die Klappe 31 ist durch einen Antrieb 32 verschwenkbar.

In der linken Seite der Figur 2 schließt sich an den rinnenförmigen Teil 27 ein Rohr 24 an. Auch hier ist eine Klappe 31 vorgesehen, die durch einen hierbei außerhalb der Gasleitung 11 angeordneten Antrieb 32 verschwenkbar ist.

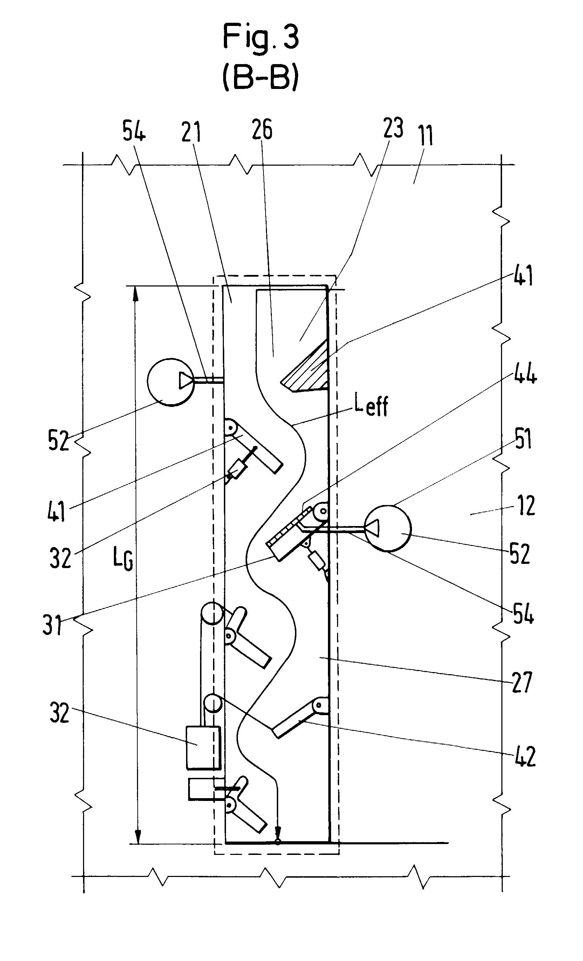

In der Figur 3 ist die Gasführung 21 in der Draufsicht BB mit dem Blick durch den Schlitz 23 dargestellt. Im Freiraum 26 der Rinne 27 sind Hindernisse 41 vorgesehen, die - wie im oberen Teil - als reines Ableitblech bzw. als schwenkbare Klappen ausgestaltet sind. Zum Veschwenken kommen verschiedene Antriebe 32 zum Einsatz, beispielsweise hydraulische / pneumatische Kolben-Zylinder-Einheiten oder auch über Seile mit den Klappen verbundene elektrische Antriebe. Die Antriebe können im Freiraum 26 der Gasführung 21 angeordnet sein oder sich außerhalb der Rinne befinden.

Weiterhin ist eine Gasförderstation 52 vorgesehen, die über eine Zuleitung 54 mit dem Freiraum 26 oder einer perforierten Oberfläche 44 der Klappe 31 in Verbindung steht.

Der Abstand vom Eintritt bis zum Austritt der Gasführung 21 ist mit LG benannt. Weiterhin ist mit einem geschlängelten Pfeil die effektive Strömungslänge (L_{eff}) gekennzeichnet. Es ist deutlich zu sehen, daß L_{eff} > L_{G} ist.

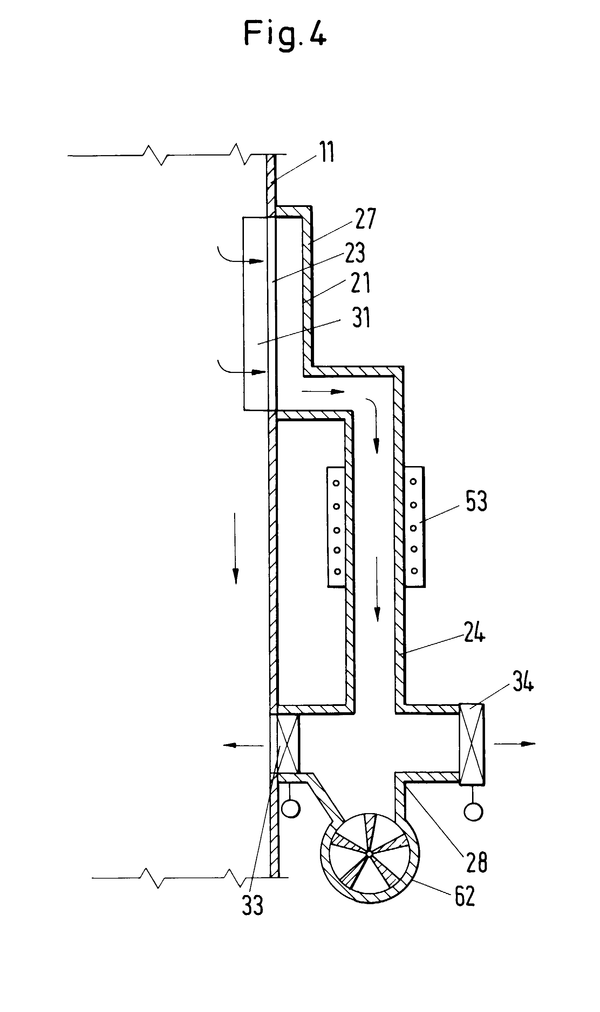

In der Figur 4 ist die Gasführung 21 im vorderen Teil als Rinne 27 und im nachfolgenden Teil als Rohr 24 ausgestaltet. Am Rohr 24 ist eine Kühleinrichtung 53 angeordnet.

Im Mündungsbereich 28 des Rohres 24 ist an seiner untersten Stelle eine gasdichte Austragseinheit 62 vorgesehen.

Die Mündung 28 weist in der Figur 4 zwei Ausgänge aus, die in Richtung Gasleitung durch einen Absperrschieber 33 und von der Gasleitung wegführend durch einen Absperrschieber 34 verschließbar ist.

### Positionsliste

### Leiten Hauptstrom

- 11: Gasleitung
- 12: Teilbereich
- 13: Innenraum
- 14: Verwirbelungsteil

### Leiten Teilstrom

- 21: Gasführung
- 22: Öffnung
- 23: Schlitz
- 24: Rohr
- 25: Eintrittsbohrung
- 26: Freiraum
- 27: Rinne

### Abtrennen

- 31: Klappe
- 32: Antrieb
- 33: Absperrschieber innen
- 34: Absperrschieber außen

### Bremsen

- 41: Hindernisse
- 42: einarmiger Hebel
- 43: Aktuator
- 44: perforierte Oberfläche

### Löschen/Kühlen

- 51: Löscheinrichtung
- 52: Gasförderstation
- 53: Kühleinrichtung
- 54: Zuleitung

### Staubaustrag

- 61: Ablass
- 62: gasdichte Austragseinrichtung

- G_{H}: Hauptstrom
- G_{T}: Gasteilstrom
- G_{M}: gasförmiges Medium
- L_{G}: Länge Gasführung
- L_{eff}: effektive Länge

## Patentansprüche

1. Verfahren zum Führen von heißen, mit Partikeln beladenen Gasen, die bei einem metallurgischen Prozeß, insbesondere in einem metallurgischen Gefäß wie einem Elektrolichtbogenofen, über eine Gasleitung einer Gasreinigung zugeführt werden, wobei der Gasstrom in einem Abschnitt der Gasleitung in Rotation versetzt wird,
gekennzeichnet durch folgende Schritte:
a) der Randbereich des rotierenden Gasstromes wird abgeleitet und
b) einer unabhängig vom Gashauptstrom durchführbaren Behandlung unterzogen.

2. Verfahren nach Anspruch 1,
dadurch gekennzeichnet,
daß der vom Gashauptstrom (G_{H}) abgezweigte Gasteilstrom (G_{T}) abgebremst wird.

3. Verfahren nach einem der vorgenannten Ansprüche,
dadurch gekennzeichnet,
daß der vom Gashauptstrom (G_{H}) abgezweigte Gasteilstrom (G_{T}) gekühlt wird.

4. Verfahren nach Anspruch 2 oder 3,
dadurch gekennzeichnet,
daß der Strömungsweg des Gasteilstroms (G_{T}) zu dem des Gashauptstroms (G_{H}) verlängert wird.

5. Verfahren nach Anspruch 1,
dadurch gekennzeichnet,
daß in dem vom Gashauptstrom (G_{H}) abgezweigten Gasteilstrom (G_{T}) befindliche glühende Partikel gelöscht werden.

6. Verfahren nach einem der vorgenannten Ansprüche,
dadurch gekennzeichnet,
daß der Gasteilstrom (G_{T}) nach der Sonderbehandlung dem Gashauptstrom (G_{H}) wieder zugeführt wird.

7. Einrichtung zum Führen von heißen, mit Partikeln beladenen Gasen mit einer metallurgischen Anlage, insbesondere einem metallurgischen Gefäß wie ein Elektrolichtbogenofen, und einer Gasleitung, welche die metallurgische Anlage mit einem einen Tuchfilter aufweisenden Gasreinigungsanlage verbindet, wobei die Gasleitung einen rohrförmig ausgestalteten Bereich besitzt, welcher ein konzentrisch angeordnetes Verwirbelungsteil aufweist, mit dem ein durch die Gasleitung führbarer Gasstrom in Rotation versetzbar ist, zur Durchführung des Verfahrens nach Anspruch 1,
dadurch gekennzeichnet,
daß die Rohrwandung des Teilbereichs (12) der Gasleitung (11) mindestens eine Öffnung (22) aufweist, durch die ein Gasteilstrom (G_{T}) des Gases aus der Gasleitung (11) abführbar ist,
daß die Öffnung (22) durch eine Klappe (31) mindestens teilweise abgedeckt ist,
daß die Klappe (31) in der Weise am Rand der Öffnung (22) befestigt ist, daß eine vorgebbare Menge aus dem Randbereich des Gashauptstromes (G_{H}) ableitbar ist, und
daß die Öffnung (22) mit einer Gasführung (21) für den Gasteilstrom (G_{T}) verbunden ist.

8. Einrichtung nach Anspruch 7,
dadurch gekennzeichnet,
daß die Öffnung (22) als parallel zur Gasströmungsrichtung des Gashauptstromes (G_{H}) weisender Schlitz (23) ausgestaltet ist.

9. Einrichtung nach Anspruch 8,
dadurch gekennzeichnet,
daß die an der Öffnung (22) vorgesehene Klappe (31) zum Verschwenken an Antriebe (32) angeschlossen ist.

10. Einrichtung nach einem der Ansprüche 7 bis 9,
dadurch gekennzeichnet,
daß die Gasführung (21) als zur Gasleitung (11) hin offene Rinne (27) ausgestaltet ist.

11. Einrichtung nach einem der Ansprüche 7 bis 10,
dadurch gekennzeichnet,
daß die Gasleitung (11) für den Hauptstrom (G_{H}) und die Gasführung (21) für den Gasteilstrom (G_{T}) im wesentlichen parallel und dabei vertikal geführt sind,
daß ein Teil der Gasführung (21) rohrförmig (24) ausgestaltet ist und
daß die Gasführung (21) für den Gasteilstrom (G_{T}) stromabwärts über eine Eintrittsbohrung (25) wieder mit dem Innenraum (13) der Gasleitung (11) verbunden ist.

12. Einrichtung nach mindestens einem der Ansprüche 7 bis 11,
dadurch gekennzeichnet,
daß die Gasführung (21) eine größere effektive Strömungslänge (L_{eff}) aufweist als der Abstand (L_{G}) des Austritts zum Eintritt der Gasleitung (11).

13. Einrichtung nach Anspruch 12,
dadurch gekennzeichnet,
daß die Gasführung (21) zur Erhöhung der effektiven Strömungslänge (L_{eff}) zick-zack-förmig ausgestaltet ist.

14. Einrichtung nach Anspruch 12,
dadurch gekennzeichnet,
daß die Gasführung (21) zur Erhöhung der effektiven Strömungslänge (L_{eff}) Hindernisse (41) aufweist, die in den Freiraum (26) der Gasführung (21) hineinragen.

15. Einrichtung nach Anspruch 14,
dadurch gekennzeichnet,
daß die Hindernisse (41) einarmige Hebel (429 sind, und
daß Aktuatoren (43) vorgesehen sind, mit denen die Lage der Hebel (42) zur Strömungsrichtung des Gasteilstromes (G_{T}) verstellbar sind.

16. Einrichtung nach Anspruch 7,
dadurch gekennzeichnet,
daß die Gasführung (21) für den Gasteilstrom (G_{T}) an eine Kühl- und/oder Löscheinrichtung (51, 53) angeschlossen ist.

17. Einrichtung nach Anspruch 16,
dadurch gekennzeichnet,
daß die Löscheinrichtung (51) eine Gasförderstation (52) ist, mit der gasförmige Medien (G_{M}), insbesondere Inertgas, in den Freiraum (26) der Gasführung (21) förderbar ist.

18. Einrichtung nach den Ansprüchen 17 und 14,
dadurch gekennzeichnet,
daß die dem Gasteilstrom(G_{T}) entgegengerichteten Oberflächen (44) der (41) perforiert sind, und
daß die Gasförderstation (52) Bauteile enthält, mit denen die gasförmigen Medien (G_{M}) förderbar sind.

19. Einrichtung nach Anspruch 11,
dadurch gekennzeichnet,
daß die teilweise rohrförmig ausgebildete Gasführung in der Nähe seiner Mündung einen Ablass (61) aufweist.

20. Einrichtung nach Anspruch 19,
dadurch gekennzeichnet,
daß der Ablass (61) eine gasdichte Austragseinrichtung (62) ist, z.B. eine Staubschnecke.

21. Einrichtung nach Anspruch 19 oder 20,
dadurch gekennzeichnet,
daß die Mündung (28) der Gasführung (21) als Saugdüse (29) ausgebildet ist.
